# DEMANDE DE BREVET EUROPEEN

(11) **EP 4 834 862 A1**
(43) Date de publication de la demande: **04.11.2026**
(21) Numéro de dépôt: 26175491.5
(22) Date de dépôt: 29.04.2026
(51) Int. Cl.: C04B 28/14, E04C 2/04

(54) **PROCÉDÉ DE RÉCUPÉRATION ET DE VALORISATION DE TROIS FLUX D EAU POUR UNE INSTALLATION DE FABRICATION DE PRODUITS EN PLÂTRE**

(30) Priorité: 29.04.2025 BE 202505282
(71) Demandeur: B. en N. Knauf en Co, 8710 Wielsbeke (BE)
(72) Inventeur: VANDEWEEGE, Dirk, 8710 Wielsbeke (BE)
(74) Mandataire: Calysta NV

(57) **Abrégé**

L'invention concerne un procédé de récupération et de valorisation de trois flux d'eau comprenant :
- Récupération d'un premier flux d'eau et d'un deuxième flux d'eau,
- Récupération d'un troisième flux d'eau provenant d'un procédé de fabrication de produits en plâtre
- Transport dudit troisième flux d'eau vers ladite deuxième installation de fabrication,
- Mélange des premier, deuxième et troisième flux d'eau,
- Mesure de la conductivité totale de l'eau mélangée,
- Injection de l'eau mélangée dans ladite installation de fabrication de produits en plâtre.

## Description

La présente invention se rapporte à un procédé de récupération et de valorisation de trois flux d'eau, à une installation de fabrication de plaques de plâtre et à une utilisation continue d'un flux d'eau résultant de la fabrication de carreaux de plâtre d'une première installation vers une deuxième installation.

La présente invention se rapporte au domaine du plâtre et plus exactement à la valorisation d'eau générée en cours de procédé au sein d'une installation qui permet la fabrication de produits en plâtre.

Le document CN 21442116 décrit un système de production de gypse à haute résistance qui valorise les eaux usées générées lors de la production de CPE (polyéthylène chloré). Le procédé propose la récupération des eaux usées issues du lavage (dans une cuve de lavage) du procédé de production de CPE, l'ajout de carbonate de calcium dans un bassin d'eaux usées afin de neutraliser l'acidité et l'introduction de cette solution dans une cuve de réaction où elle se mélange avec une solution de sulfate de sodium pour former une boue de sulfate de calcium. Ensuite, un traitement ultérieur de cette boue à travers une série d'unités de traitement (cyclone, filtre, centrifugeuse, séchoir, refroidisseur, broyeur, et machine d'emballage) aboutit à la production finale de gypse à haute résistance.

Malheureusement, le système est spécifiquement adapté à la récupération et au traitement d'un flux d'eaux usées acides provenant d'une production de CPE. Le procédé décrit comprend de nombreuses étapes (réaction, séparation, filtration, centrifugation, séchage, etc.), ce qui peut entraîner une complexité accrue en termes de maintenance et de coûts d'investissement.

Le document CN207483617 divulgue une installation de production de gypse équipée d'un lit fluidisé et intégrée dans un système global de traitement des fumées et de recyclage des eaux usées industrielles. Cette installation combine un équipement de désoxydation et de dénitrification des fumées par voie sèche - lequel produit des sous-produits issus de la réaction des gaz traités avec des absorbeurs - avec des équipements de récupération des sous-produits, de dosage de matières premières (silice, talc, liants), de mélange des matières sèches et de l'eau de procédé (qui peut être issue d'eaux usées industrielles), de coulage, de mise en forme et de cure du gypse. Le système permet ainsi de valoriser les sous-produits de traitement des fumées pour obtenir un gypse de qualité tout en réduisant la quantité d'eaux usées rejetées et en favorisant leur réutilisation dans le processus.

Toutefois, ce document s'inscrit dans un système fermé et intégré, limitant ainsi la flexibilité de l'approvisionnement en eau. De plus, L'installation est complexe (multiples équipements de mélange, de traitement et de transformation) ce qui peut entraîner des coûts d'investissement et de maintenance conséquents. Ainsi, ce procédé propose un recyclage interne.

Typiquement, l'eau usée doit généralement être traitée avant d'être réutilisée. Dans de nombreux procédés industriels, notamment dans la production de gypse ou de produits en plâtre, l'eau issue de certaines étapes (par exemple, après un lavage ou des réactions chimiques) peut présenter des caractéristiques indésirables (acidité, impuretés, résidus chimiques) qui risquent d'altérer la qualité du produit final ou d'endommager les équipements. Le traitement permet ainsi de neutraliser l'eau, d'éliminer les contaminants et d'ajuster sa composition pour qu'elle soit conforme aux exigences du procédé de production.

L'eau usée peut contenir des impuretés (sels, acides, particules ou résidus organiques) susceptibles d'altérer les réactions de formation du plâtre. Ces contaminants peuvent interférer avec la cristallisation et la cohésion du gypse, entraînant ainsi une diminution de la résistance, des défauts esthétiques et une variabilité des propriétés du produit final. C'est pourquoi **il** est généralement nécessaire de traiter l'eau usée avant de la réintroduire dans le procédé de fabrication pour garantir la qualité et la performance des produits en plâtre.

Il existe donc un réel besoin de fournir un procédé simple et peu couteux qui permet de valoriser l'eau usée produite lors de procédé de fabrication de produits en plâtre afin d'éviter tout rejet dans l'environnement tout en permettant la fabrication de nouveaux produits en plâtre. Cette eau devrait présenter des caractéristiques compatibles avec le processus de transformation du plâtre, afin d'éviter toute altération négative des propriétés du produit final (résistance, apparence, homogénéité, etc.).

Pour résoudre ce problème, la présente invention fournit un procédé de récupération et de valorisation de trois flux d'eau entre une première installation de fabrication de produits en plâtre et une deuxième installation de produits en plâtre, comprenant les étapes suivantes :
- Récupération d'un premier flux d'eau comprenant majoritairement de l'eau de pluie,
- Récupération d'un deuxième flux d'eau comprenant majoritairement de l'eau provenant d'une source naturelle,
- Récupération d'un troisième flux d'eau provenant d'un procédé de fabrication de produits en plâtre qui est mis en œuvre dans la première installation qui se situe à une distance inférieure à 10 km, de préférence inférieure à 5 km par rapport à la deuxième installation,
- Transport dudit troisième flux d'eau vers ladite deuxième installation de fabrication de produits en plâtre et stockage de celui-ci,
- Mélange des premier, deuxième et troisième flux d'eau dans une cuve,
- Mesure de la conductivité totale de l'eau mélangée,
- Injection de l'eau mélangée dans ladite deuxième installation de fabrication de produits en plâtre.

Dans le cadre de la présente invention, **il** a été observé qu'une valorisation d'un flux d'eau issu de la fabrication de produits en plâtres, en particulier de carreaux en plâtre, était possible entre deux installations de plâtre. Cela est particulièrement avantageux car dans le domaine industriel, **il** n'est pas rare que cette eau soit directement jetée dans des sources naturelles autour du site de production.

Or, la présente invention permet sans traitement additionnel de ce flux d'eau de le revaloriser sur une autre installation qui se trouve à moins de 10 km de là. Ainsi, **il** a été surprenant de constater qu'un mélange de ces 3 flux d'eau a permis de fournir une eau composite qui correspond à une eau mélangée.

À cet effet, la présente invention propose de mélanger ledit troisième flux d'eau avec un premier flux d'eau comprenant majoritairement de l'eau de pluie et un deuxième flux d'eau comprenant majoritairement de l'eau provenant d'une source naturelle, de manière à obtenir une eau mélangée présentant une conductivité maîtrisée, directement compatible avec le procédé de fabrication de produits en plâtre.

La mesure de la conductivité peut se faire soit dans ladite cuve soit dans un conduit appartenant à la deuxième installation. Cela permet de valider la qualité de l'eau mélangée qui peut être directement utilisée dans un procédé de fabrication de produits en plâtre, en particulier de plaques de plâtre, situé sur un autre site d'installation, ici la deuxième installation.

Ainsi, le procédé suivant l'invention est un procédé zéro déchet en eau étant donné que toute l'eau générée dans le cadre du procédé de fabrication de produits en plâtre, de préférence de carreaux de plâtre, est complètement réutilisée sur cette autre installation de manière optimale sans perdre au niveau des performances et des qualités attendues pour ces produits en plâtre. Il n'y a ainsi aucun rejet d'eau par la formation d'une boucle d'utilisation et de valorisation d'eau entre deux installations de plâtre.

De préférence, le transport est réalisé par camion ou au moyen d'un conduit qui relie ladite première installation à ladite deuxième installation. Par exemple, la première installation est une usine produisant des carreaux de plâtre qui génère de l'eau, appelée troisième flux, qui est collectée dans une citerne. Une fois pleine, le pompage de ce troisième flux est réalisé avec un camion-citerne qui le transporte vers la deuxième installation, qui peut être une usine fabriquant des plaques de plâtre.

Avantageusement, ladite première installation est une installation de fabrication de carreaux en plâtre.

Plus avantageusement, la deuxième installation est une installation de fabrication de plaques de plâtre.

Préférentiellement, l'eau provenant d'une source naturelle a été redirigée vers un canal qui constitue la source dudit deuxième flux d'eau.

Plus préférentiellement, la conductivité mesurée de l'eau mélangée (contenant les 3 flux d'eau) est inférieure à 1400 µS/cm, de préférence inférieure à 1200 µS/cm, plus préférentiellement inférieure à 1000 µS/cm (microsiemens par centimètre).

Avantageusement, la conductivité mesurée de l'eau mélangée (content les 3 flux d'eau) est comprise entre 10 et 1000 µS/cm, de préférence entre 100 et 1000 µS/cm, plus préférentiellement entre 250 et 1000 µS/cm, avantageusement entre 10 et 1400 µS/cm, plus avantageusement entre 100 et 1400 µS/cm, encore plus avantageusement entre 250 et 1400 µS/cm.

Plus préférentiellement encore, l'injection de l'eau mélangée est réalisée à un débit d'au moins 100 L/min, de préférence au moins 200 L/min, plus préférentiellement entre 200 et 400 L/ min, plus préférentiellement encore entre 250 et 350 L/min.

Selon un mode particulièrement avantageux, l'eau mélangée est obtenue en mélangeant la même quantité d'eau issues dudit premier flux et dudit deuxième flux, le restant provenant de l'eau issue dudit troisième flux.

Avantageusement, le procédé selon l'invention est réalisé en continu.

Plus avantageusement, l'étape d'injection est une injection d'eau mélangée contenant les 3 flux précités dans un conduit de ladite deuxième installation de fabrication de produits en plâtre, de préférence d'un procédé de fabrication de plaques de plâtre.

De préférence, le conduit s'étend jusqu'à une unité de mélange qui est alimentée d'une composition solide de plâtre et de l'eau mélangée contenant les 3 flux susvisés et formation d'une composition liquide de plâtre qui est ensuite appliquée entre deux plaques résultant en la fabrication de plaques de plâtre

Les plaques de plâtre sont fabriquées à partir de gypse choisi dans le groupe comprenant du gypse d'origine naturelle, du gypse recyclé provenant de la désulfurisation des gaz de fumées de centrale d'électricité thermique à base de charbon / lignite et de leurs mélanges.

Il a été observé que la sélection des proportions relatives des trois flux d'eau permet d'ajuster directement la conductivité de l'eau mélangée sans étape de traitement supplémentaire.

Dans le cadre du procédé selon la présente invention, les proportions relatives du premier flux d'eau, du deuxième flux d'eau et du troisième flux d'eau mises en œuvre lors de l'étape de mélange peuvent varier en fonction de la disponibilité respective de chacun desdits flux et/ou de la conductivité mesurée de l'eau mélangée. Ainsi, au cours du procédé, chacun des premier, deuxième et troisième flux d'eau peut représenter indépendamment de 1 % à 98 %, de préférence de 5 % à 90 %, plus préférentiellement de 10 % à 80 % en volume par rapport au volume total de l'eau mélangée.

Selon un mode de réalisation préféré, le troisième flux d'eau représente une fraction minoritaire de l'eau mélangée, notamment de 1 à 40 %, de préférence de 5 à 35 %, plus préférentiellement de 10 à 30 % en volume par rapport au volume total de l'eau mélangée, le complément étant fourni par le premier flux d'eau et le deuxième flux d'eau.

Dans le cadre du procédé selon l'invention, l'étape de mélange est réalisée en ajoutant de 1 % à 98 %, de préférence de 5 % à 90 %, plus préférentiellement de 10 % à 80 % en volume de premier flux d'eau, de 1 % à 98 %, de préférence de 5 % à 90 %, plus préférentiellement de 10 % à 80 % en volume de deuxième flux d'eau, et de 1 % à 98 %, de préférence de 5 % à 90 %, plus préférentiellement de 10 % à 80 % en volume de troisième flux d'eau, par rapport au volume total de l'eau mélangée, sous réserve que la somme des trois flux soit égale à 100 %.

Selon un mode de mise en oeuvre du procédé, l'étape de mélange est réalisée en ajoutant de 10 % à 70 % en volume de premier flux d'eau, de 10 % à 70 % en volume de deuxième flux d'eau, et de 10 % à 70 % en volume de troisième flux d'eau, de préférence de 10 % à 50 % en volume pour chacun desdits flux, plus préférentiellement de 10 % à 40 % en volume, encore plus préférentiellement de 10 % à 30 % en volume, par rapport au volume total de l'eau mélangée.

Selon un mode de mise en œuvre préféré du procédé, l'étape de mélange est réalisée en ajoutant de 30 % à 60 % en volume de premier flux d'eau, de 30 % à 60 % en volume de deuxième flux d'eau, et de 1 % à 40 % en volume de troisième flux d'eau, de préférence de 5 % à 30 % en volume de troisième flux d'eau, par rapport au volume total de l'eau mélangée.

De manière avantageuse, l'étape de mélange est réalisée en ajoutant des quantités respectives de premier, deuxième et troisième flux d'eau de manière à obtenir une eau mélangée présentant une conductivité comprise dans une plage prédéterminée compatible avec son injection dans ladite deuxième installation de fabrication de produits en plâtre.

De manière avantageuse, l'étape de mélange est réalisée en ajoutant le premier flux d'eau, le deuxième flux d'eau et le troisième flux d'eau dans des proportions respectives de 30:30:40, de préférence de 35:35:30, plus préférentiellement de 40:40:20, encore plus préférentiellement de 45:45:10, par rapport au volume total de l'eau mélangée.

Avantageusement, l'étape de mélange est réalisée en ajoutant le premier flux d'eau, le deuxième flux d'eau et le troisième flux d'eau dans des proportions respectives de 25:35:40, de préférence de 20:40:40, plus préférentiellement de 35:25:40, encore plus préférentiellement de 40:20:40, par rapport au volume total de l'eau mélangée.

Avantageusement, l'étape de mélange est réalisée en ajoutant le premier flux d'eau, le deuxième flux d'eau et le troisième flux d'eau dans des proportions respectives de 30:40:30, de préférence de 25:45:30, plus préférentiellement de 40:30:30, encore plus préférentiellement de 45:25:30, par rapport au volume total de l'eau mélangée.

Avantageusement, l'étape de mélange est réalisée en ajoutant le premier flux d'eau, le deuxième flux d'eau et le troisième flux d'eau dans des proportions respectives de 20:60:20, de préférence de 30:50:20, plus préférentiellement de 60:20:20, encore plus préférentiellement de 50:30:20, par rapport au volume total de l'eau mélangée.

Avantageusement, l'étape de mélange est réalisée en ajoutant le premier flux d'eau, le deuxième flux d'eau et le troisième flux d'eau dans des proportions respectives de 25:65:10, de préférence de 35:55:10, plus préférentiellement de 65:25:10, encore plus préférentiellement de 55:35:10, par rapport au volume total de l'eau mélangée.

De manière plus avantageuse, l'étape de mélange est réalisée de telle sorte que la somme du premier flux d'eau et du deuxième flux d'eau représente entre 60 % et 90 %, de préférence entre 65 % et 85 %, plus préférentiellement entre 70 % et 80 % du volume total de l'eau mélangée, le reste étant constitué par le troisième flux d'eau. D'autres formes de réalisation du procédé selon l'invention sont indiquées dans les revendications annexées.

L'invention a également trait à une installation de fabrication de plaques de plâtre, de préférence mettant en œuvre le procédé selon l'une quelconque des revendications précédentes, comprenant :
- Un premier module de récupération d'un premier flux d'eau comprenant majoritairement de l'eau de pluie,
- Un deuxième module de récupération d'un deuxième flux d'eau comprenant majoritairement de l'eau provenant d'une source naturelle,
- Un troisième module de récupération d'un troisième flux d'eau provenant d'un procédé de fabrication de produits en plâtre qui est mis en œuvre dans une installation de fabrication de produits en plâtre qui se situe à une distance inférieure à 10 km, de préférence inférieure à 5 km par rapport à l'installation de fabrication de plaques de plâtre, ledit troisième module de récupération comprenant un module de transport agencé pour transporter ledit troisième flux d'eau vers ladite installation de fabrication de plaques de plâtre,
- Module de stockage agencé pour stocker ledit troisième flux d'eau,
- Module de mélange agencé pour mélanger les premier, deuxième et troisième flux d'eau dans une cuve,
- Un dispositif de mesure de la conductivité totale de l'eau mélangée,
- Un module d'injection de l'eau mélangée agencé pour alimenter un procédé de fabrication de plaques de plâtre.

D'autres formes de réalisation de l'installation selon l'invention sont indiquées dans les revendications annexées.

L'invention concerne aussi une utilisation continue d'un flux d'eau résultant de la fabrication de carreaux de plâtre d'une première installation vers une deuxième installation qui fabrique des plaques de plâtre en continu, ladite deuxième installation se situe à moins de 10 km de ladite première installation.

D'autres formes de réalisation de l'utilisation selon l'invention sont indiquées dans les revendications annexées.

D'autres caractéristiques et avantages de la présente invention seront tirés de la description non limitative qui suit, et en faisant référence aux dessins et aux exemples.

Il n'est pas recommandé d'utiliser du gypse récupéré lors de la production d'acide phosphorique. Ce gypse qui se présente sous forme de dihydraté (CaSO₄ ·2H₂O) résulte de la réaction entre le phosphate et de l'acide sulfurique. Il peut ensuite subir une préparation qui consiste à le broyer et à le purifier afin d'éliminer les impuretés éventuelles et d'obtenir une poudre homogène. Toutefois, cette matière 1^{ère} ne convient pas dans le cadre de la présente invention.

Dans certains modes de réalisation, le gypse est choisi de manière à limiter la présence d'impuretés susceptibles d'interagir avec la composition ionique de l'eau mélangée, notamment celles pouvant provenir de gypse issu de la production d'acide phosphorique.

L'invention permet ainsi de fabriquer par exemple des plaques de plâtre.

Selon un mode de réalisation préféré, on peut fabriquer des plaques de plâtre à partir du gypse d'origine naturelle.

Le gypse est ensuite chauffé dans un four. Cette étape de calcination partielle permet de transformer le dihydraté en hémihydrate en éliminant une partie de l'eau de cristallisation. L'hémihydrate, plus réactif, est alors mélangé avec de l'eau et divers additifs - tels que des retardateurs de prise, des liants et parfois des fibres - pour former une pâte homogène. Dès que l'eau est ajoutée, une réaction d'hydratation exothermique se déclenche, reconstituant progressivement le dihydraté et solidifiant la pâte.

La pâte obtenue est ensuite coulée en continu entre deux feuilles de papier ou de carton spécialement conçues pour constituer les faces de la plaque. Grâce à la réaction d'hydratation, la plaque se solidifie en quelques minutes. Pour parfaire le produit, les plaques sont ensuite transférées dans des chambres de séchage où l'excès d'humidité est éliminé, garantissant ainsi leur stabilité et leurs performances mécaniques. Enfin, les plaques séchées sont découpées aux dimensions standard, inspectées et emballées, prêtes à être utilisées dans la construction.

Dans le cadre de la présente invention, la conductivité peut s'exprimer en microsiemens par centimètre (µS/cm). La mesure peut se faire manuellement. Cela consiste à prendre un échantillon de l'eau composite (correspondant au mélange des 3 flux d'eau) et à mesurer avec un conductivimètre, connu de la personne du métier. Il est aussi possible d'ajouter un conductivimètre au sein même du procédé, par exemple à l'intérieur du moyen qui contient l'eau composite, par un exemple un conduit. Cela permet d'avoir la valeur à chaque instant et ainsi permettre un suivi contrôlé de la qualité de l'eau composite.

L'expression « eau composite » peut être interchangé par « eau mélangée » et signifie qu'elle contient le mélange des 3 flux d'eau tel qu'indiqué dans le cadre de l'invention.

L'expression « source naturelle » peut désigner les eaux provenant de nappes souterraines.

L'expression « majoritairement » utilisée dans le cadre de la présente invention peut désigner une teneur d'au moins 51 %, de préférence d'au moins 61 %, plus préférentiellement d'au moins 71 %, encore plus préférentiellement d'au moins 81 %, avantageusement d'au moins 91 %, plus avantageusement d'au moins 99 %, en volume, par rapport au volume total du flux considéré.

L'expression « majoritairement » utilisée dans le cadre de la présente invention peut également désigner une teneur comprise entre 51 % et 99 %, de préférence comprise entre 61 % et 99 %, plus préférentiellement comprise entre 71 % et 99 %, encore plus préférentiellement comprise entre 81 % et 99 %, avantageusement comprise entre 91 % et 99 %, en volume, par rapport au volume total du flux considéré.

Les exemples ci-dessous permettent d'illustrer l'invention plus en détails, y compris au vu d'un exemple comparatif afin de mettre en exergue les avantages obtenus dans le cadre de la présente invention.

### Exemple 1

Selon un mode de réalisation, le procédé de récupération et de valorisation de trois flux d'eau selon l'invention est mis en œuvre.

Une récupération d'un premier flux d'eau comprenant majoritairement de l'eau de pluie est réalisée près d'une usine qui fabrique des plaques de plâtres.

Une récupération d'un deuxième flux d'eau comprenant majoritairement de l'eau provenant d'une source naturelle, ici du canal, est réalisée près de l'usine précitée.

À moins de 5 km de l'usine susvisée se trouve une usine qui fabrique des carreaux de plâtres qui génère le troisième flux d'eau selon l'invention et qui est récupéré en sortie d'usine afin d'être transportée vers l'usine précitée. Ce troisième flux d'eau est ainsi stocké près de l'usine produisant les plaques de plâtre.

Un mélange est réalisé entre les premiers, deuxième et troisième flux d'eau dans une cuve. Une mesure de la conductivité totale de l'eau mélangée (eau composite) peut être réalisée soit dans ladite cuve soit dans un conduit de l'installation installation de fabrication de produits en plâtre. L'eau mélangée ainsi obtenue est injectée dans le conduit de ladite installation de fabrication de produits en plâtre.

Plus précisément, le conduit comprend l'eau mélangée et atteint une cuve de mélange qui est également alimentée par une composition de plâtre.

Le mélange obtenu est directement appliqué entre 2 plaques de carton afin de fournir, après séchage, et découpe les plaques de plâtre visée.

### Exemple comparatif

Un procédé de récupération d'eau entre une première installation de fabrication de produits en plâtre et une deuxième installation de produits en plâtre, comprenant les étapes suivantes est mis en œuvre.

Un flux d'eau provenant d'un procédé de fabrication de carreaux de plâtres est récupéré dans une citerne, transporté vers une installation de fabrication de plaques de plâtre et stocké. L'eau usée contenant une série d'impuretés est directement utilisée dans ladite installation de fabrication de produits en plâtre afin d'alimenter une composition de plâtre. Le mélange obtenu est appliqué entre deux feuilles en carton pour former les plaques de plâtre qui sont séchées puis découpées.

Toutefois, la qualité de la plaque de plâtre ainsi obtenue ne convient pas. Il a été constaté un manque d'adhérence qui impacte négativement les propriétés de la plaque de plâtre qui ne peut pas être utilisée dans le domaine de la construction.

Les articles « un » et « une » sont utilisés ici pour faire référence à un ou plus d'un (à savoir, à au moins un) des objets grammaticaux de l'article et peuvent être remplacés par un article qui désigne un pluriel comme par exemple au « moins 2 », « au moins 3 », « plusieurs » etc...

Les expressions « dans un mode de réalisation », « selon un mode de réalisation » et autres signifient généralement que la particularité, structure ou caractéristique particulière suivant l'expression est incluse dans au moins un mode de réalisation de la présente divulgation, et peut être incluse dans plus d'un mode de réalisation de la présente divulgation. Il est important de noter que de telles expressions ne font pas nécessairement référence au même mode de réalisation.

Si le texte indique qu'un composant ou une particularité « peut », ou « pourrait » être incluse ou avoir une caractéristique, il n'est pas nécessaire que ce composant ou cette particularité particulier (particulière) soit inclus(e) ou ait la caractéristique.

S'il apparait ici, le terme « comprenant » ou « contenant » et les dérivés de ceux-ci ne sont pas destinés à exclure la présence d'un quelconque composant, étape ou procédure additionnel, que celui-ci soit divulgué ou non ici. Afin d'éviter tout doute, le terme « comprenant » peut inclure tout élément / additif, adjuvant ou composé additionnel, sauf indication contraire. Par contraste, le terme « essentiellement constitué de », s'il apparait ici, exclut de la portée de toute citation suivante tout autre composant, étape ou procédure, à l'exception de ceux qui ne sont pas essentiels à l'opérabilité et le terme « constitué de », s'il est utilisé, exclut tout composant, étape ou procédure non spécifiquement défini ou indiqué. Les termes « ou » et « et/ou », sauf indication contraire, font référence aux membres indiqués individuellement ainsi que dans toute combinaison. Par exemple, l'expression A et/ou B fait référence à A seul, à B seul, ou à A et B. De plus, le terme et tout équivalent à « comprenant » peut être remplacé par « constitué de ».

Aussi, les termes « obtenable » ou « pouvant être obtenu » ou tout expression similaire ou dérivées peuvent être remplacés par « directement obtenu ».

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de récupération et de valorisation de trois flux d'eau entre une première installation de fabrication de produits en plâtre et une deuxième installation de produits en plâtre, comprenant les étapes suivantes :
- Récupération d'un premier flux d'eau comprenant majoritairement de l'eau de pluie,
- Récupération d'un deuxième flux d'eau comprenant majoritairement de l'eau provenant d'une source naturelle,
- Récupération d'un troisième flux d'eau provenant d'un procédé de fabrication de produits en plâtre qui est mis en œuvre dans la première installation qui se situe à une distance inférieure à 10 km, de préférence inférieure à 5 km par rapport à la deuxième installation,
- Transport dudit troisième flux d'eau vers ladite deuxième installation de fabrication de produits en plâtre et stockage de celui-ci,
- Mélange des premier, deuxième et troisième flux d'eau dans une cuve,
- Mesure de la conductivité totale de l'eau mélangée,
- Injection de l'eau mélangée dans ladite deuxième installation de fabrication de produits en plâtre.

2. Procédé selon la revendication 1, dans lequel le transport est réalisé par camion ou au moyen d'un conduit qui relie ladite première installation à ladite deuxième installation.

3. Procédé selon la revendication 1 ou 2, dans lequel ladite première installation est une installation de fabrication de carreaux en plâtre

4. Procédé selon l'une quelconque des revendications précédentes, dans lequel la deuxième installation est une installation de fabrication de plaques de plâtre

5. Procédé selon l'une quelconque des revendications précédentes, dans lequel l'eau provenant d'une source naturelle a été redirigée vers un canal qui constitue la source dudit deuxième flux d'eau.

6. Procédé selon l'une quelconque des revendications précédentes, dans lequel la conductivité mesurée de l'eau mélangée est inférieure à 1400 µS/cm, de préférence inférieure à 1200 µS/cm, plus préférentiellement inférieure à 1000 µS/cm (microsiemens par centimètre).

7. Procédé selon l'une quelconque des revendications précédentes, dans lequel l'injection de l'eau mélangée est réalisée à un débit d'au moins 300 L/min, de préférence au moins 200 L/min, plus préférentiellement entre 200 et 400 L/ min, plus préférentiellement encore entre 250 et 350 L/min.

8. Procédé selon l'une quelconque des revendications précédentes, dans lequel l'eau mélangée est obtenue en mélangeant la même quantité d'eau issues dudit premier flux et dudit deuxième flux, le restant provenant de l'eau issue dudit troisième flux.

9. Procédé selon l'une quelconque des revendications précédentes, réalisé en continu.

10. Procédé selon l'une quelconque des revendications précédentes, dans lequel l'étape d'injection est une injection d'eau mélangée contenant les 3 flux précités dans un conduit de ladite installation de fabrication de produits en plâtre, de préférence d'un procédé de fabrication de plaques de plâtre.

11. Procédé selon la revendication 10, dans lequel le conduit s'étend jusqu'à une unité de mélange qui est alimentée d'une composition solide de plâtre et de l'eau mélangée contenant les 3 flux susvisés et formation d'une composition liquide de plâtre qui est ensuite appliquée entre deux plaques résultant en la fabrication de plaques de plâtre.

12. Installation de fabrication de plaques de plâtre, de préférence mettant en œuvre le procédé selon l'une quelconque des revendications précédentes, comprenant :
- Un premier module de récupération d'un premier flux d'eau comprenant majoritairement de l'eau de pluie,
- Un deuxième module de récupération d'un deuxième flux d'eau comprenant majoritairement de l'eau provenant d'une source naturelle,
- Un troisième module de récupération d'un troisième flux d'eau provenant d'un procédé de fabrication de produits en plâtre qui est mis en œuvre dans une installation de fabrication de produits en plâtre qui se situe à une distance inférieure à 10 km, de préférence inférieure à 5 km par rapport à l'installation de fabrication de plaques de plâtre, ledit troisième module de récupération comprenant un module de transport agencé pour transporter ledit troisième flux d'eau vers ladite installation de fabrication de plaques de plâtre,
- Module de stockage agencé pour stocker ledit troisième flux d'eau,
- Module de mélange agencé pour mélanger les premier, deuxième et troisième flux d'eau dans une cuve,
- Un dispositif de mesure de la conductivité totale de l'eau mélangée,
- Un module d'injection de l'eau mélangée agencé pour alimenter un procédé de fabrication de plaques de plâtre.

13. Utilisation continue d'un flux d'eau résultant de la fabrication de carreaux de plâtre d'une première installation vers une deuxième installation qui fabrique des plaques de plâtre en continu, ladite deuxième installation se situe à moins de 10 km de ladite première installation.
